# EUROPEAN PATENT SPECIFICATION

(11) **EP 2 047 746 B1**
(45) Date of publication and mention of the grant of the patent: **19.01.2011**
(21) Application number: 08013530.4
(22) Date of filing: 28.07.2008
(51) Int. Cl.: A01K 97/02

(54) **Swimfeeder**
Futterkorb
Dispositif d'amorcage pour la pêche

(30) Priority: 12.10.2007 GB 0719918
(43) Date of publication of application: 15.04.2009
(73) Proprietor: Drennan International Limited, Oxford, OX 4 2EX (GB)
(72) Inventor: Drennan, Peter John, Cuddesdon Oxon OX44 9HG (GB)
(74) Representative: Blood, Marlon

(56) References cited:
- EP-A- 1 800 538
- EP-A- 1 920 653
- GB-A- 2 123 261
- GB-A- 2 208 992

## Description

The present invention relates to the field of swimfeeders.

A swimfeeder is a device used in fresh water angling that is attached to a fishing line near to the hook and which holds bait for attracting fish to the hook. The swimfeeder is adapted to be cast and to sit on the river bed. A variety of types of bait may be used with the swimfeeder, including particulate bait such as maggots, seeds etc, and ground bait.

EP1800538 discloses a swimfeeder comprising an elongate hollow body defining a chamber for bait, and an attachment device for attaching the swimfeeder to a fishing line. The elongate body has a longitudinal axis and includes an end weight located at a first longitudinal end of the body, and a side weight having pegs which co-operate with corresponding holes in a floor of the chamber to secure the weight to the underside of the bait chamber floor.

GB2123261 discloses a bait chamber comprising a tubular body having a removable end cap at each end thereof and having aperturing for the emergence of bait such as breadcrumbs and/or maggots, and weighting means on said body to cause the container to sink in water when containing bait.

GB2208992 discloses a swimfeeder comprising a container for housing bait, the container having a base portion adapted for seating on the bed of a body of water, the base portion having a removable insert formed of a relatively heavy material.

EP1920653 discloses a swimfeeder kit comprising a swimfeeder having a body defining a region for weights and a region for bait, and a set of weights, wherein more than one of the said weights may be loaded, at the selection of the angler, into the weight region and occupy the weight region at the same time.

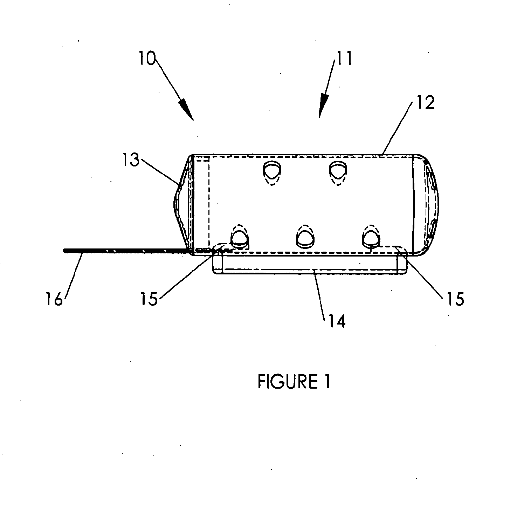

A known oval block swimfeeder is shown in Figure 1 from a side view. The swimfeeder 10 comprises an elongate body 11 having a main portion 12 open at one end and a cap portion 13 which serves to close off the open end. The body 11 is weighted at its base by a base weight 14 made from lead. The base weight 14 is formed with integral legs 15 and is attached to the main portion 12 of the body 11 by inserting the legs 15 into apertures in the base and bending the legs 15 over to the position shown in Figure 1 (when the cap portion 13 is removed) to prevent the withdrawal of the legs 15 from the apertures and thereby secure the base weight 14 to the underside of the body 11. The swimfeeder 10 is attached to a fishing line by an eye (not visible from the Figure 1 view) formed In a connection tab 16.

Securing the base weight 14 to the underside of the body 11 In the manner shown results in a number of shortcomings. First, during use, there is a tendency for the fishing line to become trapped between the body 11 and the base weight 14. Second, since surfaces on the underside of the body 11 overhang regions around the periphery of the base weight, the current flowing through those regions will inevitably apply some upward lift to the overhanging surfaces, thereby having a deleterious impact on the way the swlmfeeder holds bottom.

With this in mind, according to claim 1, the present invention provides a swimfeeder comprising an elongate body and a weight, the elongate body comprising a base structure, and walls upstanding from the base structure so as to define a chamber for bait, the base structure comprising an external surface at the lowermost portion thereof, and a holding surface, spaced upwardly from said external surface, having an aperture opening into the chamber and holding means wherein the holding means comprises a fixing pin and the weight comprises a hole into which the fixing pin is inserted, or vice versa, wherein the weight is held in contact with the holding surface by the engagement of the fixing pin and the hole such that an upper face of the weight closes off the aperture and a lower face of the weight provides a bottom surface for the swimfeeder, wherein at least most of the mass of the weight is located upwardly of said external surface.

Since most of the mass of the weight is located inwardly of said external surface, the portion of the mass of weight which is located below the external surface is reduced in comparison with the prior art swimfeeder of Figure 1, thereby enabling a corresponding reduction in the differential between the level of the face of the weight serving as the bottom surface of the swimfeeder and said external surface. Reducing this differential diminishes the source of unwanted lift and also decreases the possibility of the line becoming trapped in the edge between the body and the weight.

In one embodiment, at least 70% of the mass of the weight is located inwardly of said external surface.

In a preferred embodiment, the weight is located such that said face of the weight and said external surface of the body together provide a generally flat bottom surface for the swimfeeder. According to this embodiment, since the body and the weight together provide a generally/substantially flat bottom to the swimfeeder, the possibility of the line becoming trapped in the edge between the body and the weight is eliminated, as is the differential between the level of surfaces of the weight and surfaces of the body as a source of unwanted lift. It will be appreciated that in this embodiment substantially all of the mass of the weight is located inwardly of said external surface save for a miniscule portion which is located on the same level as said external surface.

Preferably, the body comprises a first end and a second end from which projects an attachment tab for attachment to a fishing line.

Preferably, the centre of mass of the weight is located towards the first end of the body. Having the centre of mass of the weight biased towards the first end of the body, which is at the opposite end of the body to the attachment tab, promotes flight stability of the swimfeeder during casting and also greater casting distance, and further ensures that the first end of the body will face upstream on the river bed.

A preferred geometry for the weight is that of a elongate slab having opposite first and second ends, and an upper major face and a lower major face. A biasing of the centre of mass of the weight to an one end can be achieved by shaping the weight such that its major faces have sides which outwardly taper from the second end to the first end. Additionally, or alternatively, there may be a local thickening of the slab at the first end of the weight.

In a preferred embodiment, surfaces of the first end of the body and surfaces of the first end of the slab together provide a smoothly curved profile to the upstream end of the swimfeeder. Presenting a streamlined profile to the current assists the swimfeeder to hold bottom well.

Preferably, the fixing pin may be held in place within the hole by the permanent distortion in shape of the material of the fixing pin during assembly through a localised application of energy to the fixing pin.

Preferably, said generally flat bottom surface comprises a plurality of small pimples some formed on the said external surface of the body and some formed on said face of the weight. The pimples serve to promote grip on the river bed.

Throughout this specification, where reference is made to a river, similar considerations also apply to lakes and other like fresh water expanses. In addition, in the context of the present invention, directional or orientational terms such as "bottom", "lowermost", "horizontal", "upwardly" and the like are to be construed in the context of the swimfeeder being in its intended orientation whilst sitting on the river bed unless otherwise stated.

Exemplary embodiments of the invention are hereinafter described with reference to the accompanying drawings, in which:
Figure 1 shows a side view of a known oval blockend swimfeeder;
Figure 2 shows a perspective view of a swimfeeder in accordance with an embodiment of the invention;
Figure 3 shows a side view of the Figure 2 swimfeeder;
Figure 4 shows an end view of the Figure 2 swimfeeder;
Figure 5 shows a view from below of the Figure 2 swimfeeder;
Figure 6 shows a longitudinal section view of the swimfeeder of Figure 2 taken along the axis A-A;
Figure 7 shows a similar view to Figure 6 in which the base weight used in Figures 2-6 has been replaced with a lighter one;
Figure 8 shows the same view as Figure 5 when the swimfeeder has its base weight removed; and
Figures 9(a) and 9(b) illustrate the fixing of the base weight to the swimfeeder body.

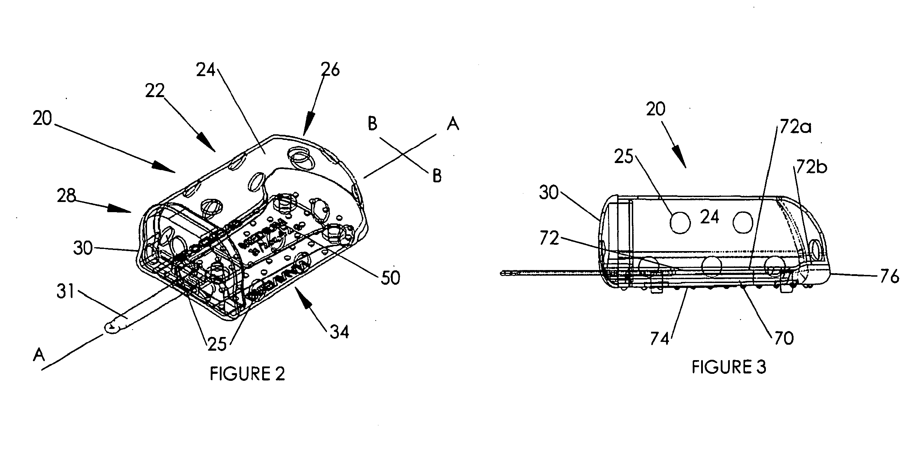

A swimfeeder for fresh water angling in accordance with a preferred embodiment is generally designated 20. Referring to Figure 2, the swimfeeder 20 comprises a body 22 made from plastics material. The body 22 is elongate and has a first end 26 and a second end 28. The body 22 consists of a hollow main portion 24 have an opening at one end and a cap portion 30 which closes off the opening with an interference fit at the second end 28 of the body 22. The swimfeeder 20 further comprises a connection tab 31 comprising a nylon tab part fitted within a silicone sleeve. The connection tab 31 includes an eye 31a at one end by which the swimfeeder 20 is attached to a fishing line. The connection tab 31 extends from an anchoring point within the main portion 24, as is described later, through a recess in the cap portion 30. The recessing of the sleeve avoids using a butt joint which would provide a possible site for a line trap. The nylon tab itself is flexible enough to allow the cap portion 30 to be dislodged from the main portion 24 to allow easy filling of the swimfeeder 20 with bait, but strong enough to support the whole weight of the swimfeeder and withstand the casting forces. The main portion 24 is generally 'D'-shaped in cross-section with the wall corresponding to the curved portion of the 'D' being designated 32. A base structure 34 corresponds generally to the straight portion of the 'D'.

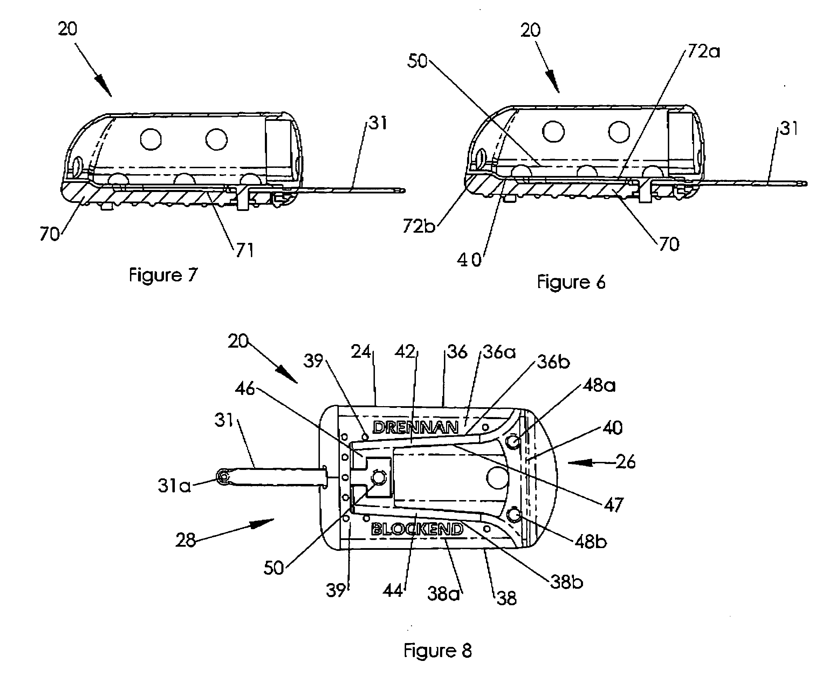

As best seen from Figure 8, the base structure 34 comprises a pair of arms 36, 38 disposed on opposite sides of the body 22, each having a lowermost surface 36a, 38a, and a side wall 36b, 38b. The arms 36, 38 extend in a generally longitudinal direction along the main portion 24 with the side walls gently tapering away from one another from the cap portion 30 towards, but terminating before, the first end 26. Just before the arms 36, 38 terminate, the side walls 36b, 38b are more strongly tapered. The lowermost surfaces 36a, 38a are generally flat and have a pattern of small surface pimples 39 to promote grip on the river bed. The base structure 34 further comprises holding surfaces in the form of flanges 40, 42, 44, 46 disposed between, and upwardly recessed relative to, the lowermost surfaces 36a, 38a. The flange 40 is disposed at the first end 26 body 22 and the flange 46 is disposed at the other end of the main portion 24. The flanges 42, 44 run longitudinally along the main portion 24 so as to connect the flanges 40, 46 and define therebetween an aperture 47. The flanges mark the upper boundary between the base structure 34 and a region or chamber 50 for bait located above the flanges. The flanges 42, 44, 46 are horizontal and generally at the same height above the bottom surfaces 36a, 38b, whereas the flange 40 slopes upwardly beyond the height of the flanges 42, 44, 46 as it approaches the first end 26. The body 22 further comprises a plurality of bait evacuation holes 25 through which bait in the bait chamber 50 can egress. The holes are provided on both the main portion 24 and the cap portion 30, but those on the cap portion 30 are larger. They can be larger as there is no risk of spillage of bait from those holes in while preparing to cast as the cap portion 30 is always uppermost.

The body 22 further comprises a holding means in the form of a plurality of rigid, integrally-formed, fixing pins 48a, 48b, 50 projecting downwardly from the holding surfaces. The fixing pins 48a, 48b project from the first end flange 40 at positions equally and oppositely offset from a central longitudinal axis of the body 22. The fixing pin 50 projects from the second end flange 46 at a position on a central longitudinal axis of the body 22. The attachment tab 30 is anchored to the fixing pin 50.

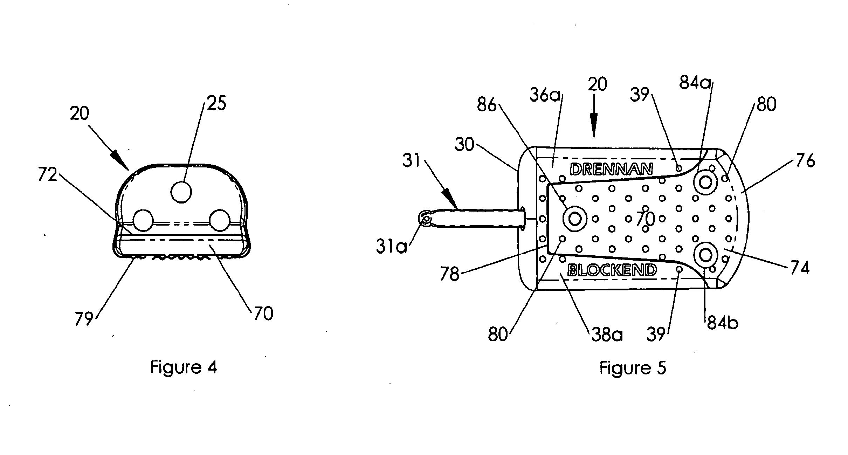

The swimfeeder 20 further comprises a base weight 70 made from lead. Referring to Figure 3, the base weight 70 is shaped generally in the form of a slab having a first, upper major face 72 and a second, lower major face 74. The face 74 is generally flat and includes an array of small surface pimples 80 to promote grip on the river bed. Referring to Figure 5, the major faces 72, 74 are shaped such that the weight 70 is elongate with a first wide end 76 having a minor end face which is curved in a direction across the slab. The weight 70 tapers inwardly from the first wide end 76 to a second narrow end 78 having a minor end face which is straight in a direction across the slab. The upper face 72 is provided with a number of surface features which facilitate co-operation with the main portion 24, that is a slightly elevated central plateau 72a which matches the shape of the aperture 48 and, in the vicinity of the first end 76, a thickened or upwardly bulging portion 72b which matches the lower surface contour of the flange 46. The weight 70 further comprises holes 84a, 84b near the first wide end 76 and a hole 86 near the second end 78.

The dimensions of the base weight 70 are matched to those of the cavity/recess defined by the internal surfaces of the base structure 34, namely the flanges 40, 42, 44, 46 and the side walls 36b, 38b, such that when the fixing pins 48a, 48b, 50 are fully inserted into the holes 84a, 84b, 86 from the direction of the upper face 72, the weight is loaded within the base structure 34 and abuts against the flanges 40, 42, 44, 46 thereby closing off the aperture 47 as can be seen in Figure 6. In other embodiments (not shown), the holding means may comprise holes which co-operate with male formations on the base weight. The dimensional matching between the base weight 70 and internal surfaces of the base structure 34 results in the lower face 74 of the base weight being flush with the lowermost surfaces 36a, 36b of the base structure, whereby together they form a composite flat bottom for the swimfeeder 20. It will also be noted from, for example, Figure 3 that the first wide end 76 of the base weight 70 is shaped such that it fits in with the profile of the neighbouring first end 26 of the body 22 in both the horizontal and vertical directions so as to provide the swimfeeder 20 as a whole with a curved continuous profile at that end. Also, from Figure 6, it can be seen that the central plateau 72a of the upper face 72 sits flush with an upper surface of the flange 40 to form a generally flat floor to the bait chamber 50.

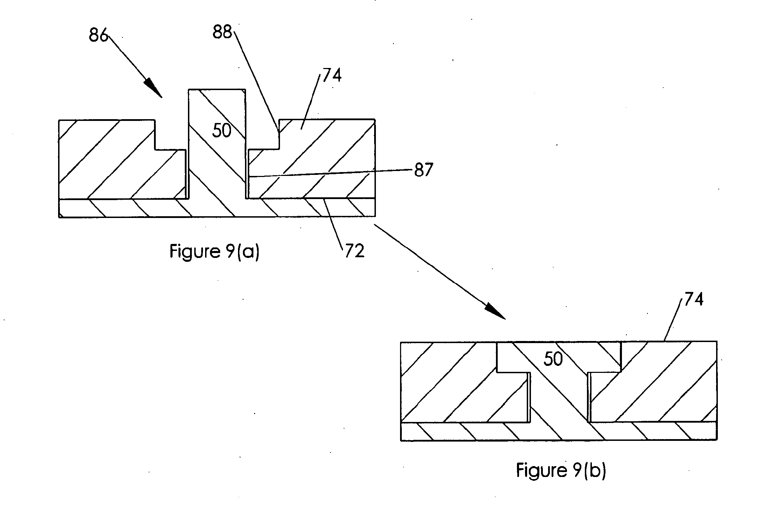

Figure 9(a) shows a cross-sectional view through the hole 86 through which the fixing pin 50 has been inserted. The hole 86 is step-tapered and comprises a narrow section, defined by a wall 87, having cross-sectional dimensions similar to that of the pin 50 adjacent to the first major face 72, and a wide section, defined by a wall 88, having cross-sectional dimensions larger than those of the pin 50 adjacent to the second major face 74. It will be noted that the fixing pin 50 is long and when fully inserted into the hole 86 from the side of the first major face 72 projects beyond the second major face 74. In order to permanently fix the base weight 70 to the main portion 24 of the body 22, the swimfeeder 20 is inverted from its normal orientation such that the fixing pin 50 is pointing upwardly as shown in Figure 9(a). Then, the fixing pin 50 is heat staked or ultrasonically welded causing the fixing pin 50 to melt and so collapse downwardly under gravity, filling the wide section of the hole 86, as illustrated in Figure 9(b), and thereby acquiring a mushroom-shaped/thickened distal end portion. On cooling and re-solidifying in this new shape, it becomes impossible for the material which made up the fixing pin 50 to be withdrawn back through the hole 86 and so fixing is achieved. During the cooling and re-solidifying, the fixing pin material may become bonded to the wall 88 defining the wide section of the hole 86. This procedure repeated for the other fixing pins 48a, 48b and holes 84a, 84b. Using this technique, the base weight 70 can be permanently fixed to the main body 24, and because this technique requires only a shaped slab of lead and does require that the slab have any vulnerable deformable formations, there is a reasonable expectation that, with careful handling, those slabs can be transported to the assembly point and used without further reparative processing. With the issue of bruising and deformation in mind, it is preferred that the holes 84a, 84b, 86 are kept small, for example, to accommodate 3mm diameter pins.

In use, when the swimfeeder 20 loaded with bait is cast, the base weight 70 in the base structure 34 ensures that the swimfeeder 20 comes to rest on the river bed with its composite flat bottom surface, comprising the lowermost surfaces 36a, 36b of the main portion 24 and the lower major face 74 of the base weight 70, in contact with the river bed. The shape of the base weight 70 is such that its centre of mass is significantly closer its first end 76 than its second end 78. It will be recalled from the preceding description that the biasing of the centre of mass towards the first end 76 stems from both the lateral tapering of the side walls and the thickened portion 72a local to the first end 76. It will be appreciated that because the density of the lead from which the base weight 70 is made is much greater than the density of the plastics material from which the body 22 is made, the base weight 70 is much heavier than the body 22, and hence the centre of mass of the swimfeeder 20 as a whole is mainly determined by the shape of the base weight 70. As a result of this biasing, there is a pronounced tendency for the swimfeeder 20 to become orientated with that first end 76 facing upstream. Hereinafter, that end of the swimfeeder 20 will be referred to as the upstream end, whereas the end with the connection tab 31 will be referred to as the downstream end. The biasing of the centre of mass towards the upstream end also has a benefit during casting. During casting, the upstream end is the leading end (since it is opposite the end with the connection tab 31) and having the mass biased towards the leading end assists with the stability of the swimfeeder 20 during flight and hence facilitates more accurate casting and casting to a greater distance.

In situ on the river bed, the swimfeeder 20 is able to hold bottom well for a variety of design reasons. The elimination of any differential between the lower face of the base weight 70 and the lowermost surfaces 36a, 36b of the main portion 24 ensures that not only has the possibility for the line to become trapped been eliminated, but so has the source of any unwanted uplift. In addition, since the upstream end of the swimfeeder 20 presents a curved, continuous and hence streamlined face to the current, it presents less resistance to the current and is, thus, less prone to being disturbed especially in a strong current. The streamlining effect is also enhanced by the fact that recessing the base weight enables a more squat (i.e. lower height-to-width ratio) swimfeeder to be made for a given chamber volume and mass of weight. In addition, the surface pimples 39, 80 on the lowermost surfaces 36a, 38a of the body 22 and on the face 74 of the base weight 70 both serve to further steady the swimfeeder 20.

The swimfeeder 20 is found to retrieve very smoothly. Failure to retrieve in a smooth manner, for example, if the swimfeeder 20 excessively oscillates or varies in the resistance to the water that it offers can result in the non-uniform laying of the line onto the reel spool of the fishing rod, which will have a negative impact on the subsequent casting accuracy. The factors governing the smoothness of the retrieve of the swimfeeder 20 are not known with certainty but the absence of abrupt edges made possible by the recessing of the base 70 and the distinctive, experimentally selected, cross-sectional profile of the body 27, as best seen in Figure 4, are thought to be contributing factors. The overall squatness of the swimfeeder 20, as previously discussed, may be a further factor.

An alternative embodiment of the invention is shown in Figure 7. The Figure 7 embodiment differs from that in Figure 6 in that the base weight 70 has been replaced by a lighter lead base weight 70'. The base weight 70' is lighter as it has been hollowed out in a central region of the upper face 72 (in the region corresponding to where the plateau 72a exists in the base weight 70) to effect the reduction in mass. It can be seen in Figure 7 that when the base weight 70' is used, its upper face does not co-operate with the flanges 40, 46 to provide a flat floor to the bait chamber 50 but is somewhat recessed. The recess is labelled 71 in Figure 7. Other than in that respect, the impact on the performance of the design is minimal. In an alternative embodiment (not shown), the dimensions of the plateau 72a can be increased such that it protrudes further into the bait chamber 50, thereby increasing the mass of the base weight 70 and providing an elevated central floor portion to the bait chamber 70. Other than in that respect, the impact on the performance of the design is minimal. Using base weights modified in this way allows the manufacturer to make swimfeeders weighted to a meaningful different range of masses using the same body 22 to meet the needs of the angler, while being advantageous to the manufacturer in terms of tooling costs, avoid tooling changes during the manufacture of the body 22 and not escalating component stock diversity. For a small swimfeeder, typical weights may be 1oz (28g) or 1.5 oz (43g). For a medium swimfeeder, typical weights may be 1.5oz (43g) or 2oz (57g). For a large swimfeeder, typical weights may be 2oz (57g) or 2.5oz (71g).

## Claims

1. A swimfeeder (20) comprising an elongate body (22) and a weight (70), the elongate body (22) comprising a base structure (34), and walls upstanding from the base structure (34) so as to define a chamber for bait, the base structure (34) comprising an external surface (36a, 38a) at the lowermost portion thereof, and a holding surface (40, 42, 44, 46), spaced upwardly from said external surface (36a, 38a), having an aperture (47) opening into the chamber and holding means (48a, 48b, 50) comprising a fixing pin and the weight comprises a hole into which the fixing pin is inserted, or vice versa, wherein the weight is held in contact with the holding surface (40, 42, 44, 46) by the engagement of the fixing pin (48a, 48b, 50) and the hole (84a, 84b, 86) such that an upper face (72) of the weight (70) closes off the aperture (47) and a lower face (74) of the weight (70) provides a bottom surface for the swimfeeder, wherein at least most of the mass of the weight (70) is located upwardly of said external surface (40, 42, 44, 46).

2. A swimfeeder (20) as in Claim 1, wherein the weight (70) is located such that said lower face (74) of the weight (70) and said external surface (36a, 38a) of the body (22) together provide a substantially flat bottom surface for the swimfeeder (20).

3. A swimfeeder (20) as in any preceding claim, wherein the body (22) comprises a first end (26) and a second end (28) from which projects an attachment tab (31) for attachment to a fishing line.

4. A swimfeeder (20) as in Claim 3, wherein the centre of mass of the weight (70) is located towards the first end (26) of the body (22).

5. A swimfeeder (20) as in Claims 3 or 4, wherein the weight (70) comprises an elongate slab having opposite first and second ends (76, 78), and an upper major face (72)and a lower major face (74).

6. A swimfeeder (20) as In Claim 5, wherein the shape of the weight is such that its major faces (72, 74) have sides which outwardly taper from the second end (78) to the first end (76).

7. A swimfeeder (20) as in Claims 5 or 6, wherein the first end (76) of the slab is locally thickened.

8. A swlmfeeder (20) as in any of Claims 5 to 7, wherein surfaces of the first end (26) of the body (22) and surfaces of the first end (76) of the slab together provide a smoothly curved profile to an upstream end of the swimfeeder.

9. A swimfeeder (20) as in any preceding Claim, wherein the fixing pin (48a, 48b, 50) Is held in place within the hole (84a, 84b, 86) by the permanent distortion in shape of the material of the fixing pin during assembly through a localised application of energy to the fixing pin.

10. A swimfeeder (20) as in any of Claims 2 to 9, wherein said substantially flat bottom surface comprises a plurality of small pimples (80) some formed on the said external surface (36a, 38a) of the body (22) and some formed on said face (74) of the weight (70).

## Patentansprüche

1. Ein Futterkorb (20), der einen länglichen Körper (22) und ein Gewicht (70) umfasst, wobei der längliche Körper eine Grundkonstruktlon (34) umfasst, und auf der Grundkonstruktion (34) aufrecht stehende Wände, die eine Kammer für den Köder beschreiben, die Grundkonstruktion (34) umfasst eine Außenfläche (36a, 38a) am unteren Teil davon und eine Haltefläche (40, 42, 44, 46), die sich oberhalb von der besagten Außenfläche (36a, 38a) befindet, mit einer Öffnung (47) in der Kammer und einer Haltevorrichtung (48a, 48b, 50), die einen Befestigungsbolzen umfasst, und das Gewicht enthält ein Loch, in das der Befestigungsbolzen gesteckt wird, oder umgekehrt, wobei das Gewicht durch das Einrasten des Befestigungsbolzens (48a, 48b, 50) in das Loch (84a, 84b, 86) in Kontakt mit der Haltefläche (40, 42, 44, 46) gehalten wird, so dass eine obere Fläche (72) des Gewichtes (70) die Öffnung (47) schließt und eine untere Fläche (74) des Gewichtes (70) eine Grundfläche für den Futterkorb bereitstellt, wobei sich mindestens der Großtell der Masse des Gewichtes (70) oberhalb der besagten Außenfläche (40, 42, 44, 46) befindet.

2. Ein Futterkorb (20) In Übereinstimmung mit Anspruch 1, wobei das Gewicht (70) so angeordnet Ist, dass die untere Fläche (74) des Gewichtes (70) und die besagte obere Fläche (36a, 38a) des Körpers (22) zusammen eine im Wesentlichen flache Grundfläche des Futterkorbes (20) bilden.

3. Ein Futterkorb (20) in Übereinstimmung mit den vorstehenden Ansprüchen, wobei der Körper (22) eine erste Seite (26) und eine zweite Seite (28) umfasst, aus denen ein Befestigungsstecker (31) zur Befestigung an einer Angelschnur hervorsteht.

4. Ein Futterkorb (20) In Übereinstimmung mit Anspruch 3, wobei sich der Schwerpunkt des Gewichtes (70) in Richtung der ersten Seite (26) des Körpers (22) befindet.

5. Ein Futterkorb (20) In Übereinstimmung mit den Ansprüchen 3 oder 4, wobei das Gewicht (70) eine längliche Platte mit gegenüberliegenden ersten und zweiten Seiten (76, 78) und einer oberen Hauptfläche (72) und einer unteren Hauptfläche (74) umfasst.

6. Ein Futterkorb (20) in Übereinstimmung mit Anspruch 5, wobei das Gewicht so geformt ist, dass dessen Hauptflächen (72, 74) Seiten aufweisen, die von der zweiten Seite (78) zur ersten Seite (76) nach außen spitz zulaufen.

7. Ein Futterkorb (20) In Übereinstimmung mit den Ansprüchen 5 oder 6, wobei die erste Seite (76) der Platte lokal verdickt Ist.

8. Ein Futterkorb (20) in Übereinstimmung mit den vorstehenden Ansprüchen 5 bis 7, wobei die Flächen der ersten Seite (26) des Körpers (22) zusammen mit Flächen der ersten Seite (76) der Platte ein gleichmäßig gekrümmtes Profil zur vorgeschalteten Seite des Futterkorbes beschreiben.

9. Ein Futterkorb (20) in Übereinstimmung mit den vorstehenden Ansprüchen, wobei der Befestigungsbolzen (48a, 48b, 50) durch die dauerhafte Verwindung der Form des Materials des Befestigungsbolzens während der Montage durch eine lokale Einbringung von Energie auf den Befestigungsbolzen im Loch (84a, 84b, 86) gehalten wird.

10. Ein Futterkorb (20) in Übereinstimmung mit den vorstehenden Ansprüchen 2 bis 9, wobei die besagte im Wesentlichen flache Grundfläche eine Vielzahl an kleinen Noppen (80) umfasst, von denen einige auf der besagten Außenfläche (36a, 38a) des Körpers (22) und einige auf der besagten Fläche (74) des Gewichtes (70) gebildet werden.

## Revendications

1. Un swimfeeder (20) composé d'un corps allongé (22) et d'un poids (70), le corps allongé (22) comprenant une structure de base (34) et des parois se tenant sur la structure de la base (34) en formant ainsi une chambre pour l'appât, la structure de base (34) comprenant une surface extérieure (36a, 38a) sur sa partie inférieure, et une surface de retenue (40, 42, 44, 46), qui s'étend vers le haut à partir de ladite surface extérieure (36a, 38a), possédant une ouverture (47) s'ouvrant dans la chambre et le dispositif de retenue (48a, 48b, 50) comprenant un goupille de fixation, et le poids étant doté d'un trou dans lequel s'introduit la goupille de fixation, ou vice versa, dans lequel le poids est maintenu au contact de la surface de retenue (40, 42, 44, 46) à travers l'engagement de la goupille de fixation(48a, 48b, 50) et le trou (84a, 84b, 86), de sorte qu'une face supérieure (72) du poids (70) constitue une surface inférieure pour le swimfeeder, dans lequel au moins la majeure partie de la masse du poids (70) est située au-dessus de ladite surface extérieure (40, 42, 44, 46).

2. Un swimfeeder (20) conforme à la revendication 1, dans lequel le poids (70) est disposé de sorte que ladite face Inférieure (74) du poids (70) et ladite surface extérieure (36a, 38a) du corps (22) constituent ensemble un fond dans l'ensemble plat pour le swimfeeder (20).

3. Un swimfeeder (20) conforme à une quelconque des revendications précédentes, dans lequel le corps (22) comprend une première extrémité (26) et une deuxième extrémité (28) sur lesquelles fait saillie une languette de fixation (31) permettant sa fixation sur une ligne de pêche.

4. Un swimfeeder (20) conforme à la revendication 3, dans lequel le centre de la masse du poids (70) est situé vers la première extrémité (26) du corps (22).

5. Un swimfeeder (20) conforme à la revendication 3 ou 4, dans lequel le poids (70) comprend une plaque de forme allongée possédant une première extrémité et une deuxième extrémité (76, 78) opposées, ainsi qu'une face principale supérieure (72) et une face principale Inférieure (74).

6. Un swimfeeder (20) conforme à la revendication 5, dans lequel la forme du poids est telle que ses faces principales (72, 74) possèdent des côtés qui se rétrécissent vers l'extérieur de la deuxième extrémité (78) à la première extrémité (76).

7. Un swimfeeder (20) conforme aux revendications 5 ou 6, dans lequel la première extrémité (76) de la plaque est épaissie localement.

8. Un swimfeeder (20) conforme à une quelconque des revendications 5 à 7, dans lequel les surfaces de la première extrémité (26) du corps (22) et les surfaces de la première extrémité (76) de la plaque forment ensemble un profil recourbé vers une extrémité supérieure du swimfeeder.

9. Un swimfeeder (20) conforme à une quelconque des revendications précédentes, dans lequel la goupille de fixation (48a, 48b, 50) est maintenue en place dans l'orifice 84a, 84b, 86) par la déformation permanente de la forme du matériau de la goupille de fixation à travers l'application localisée d'énergie sur la goupille de fixation.

10. Un swlmfeeder (20) conforme à une quelconque des revendications 2 à 9, dans lequel ledit fond dans l'ensemble plat comprend une série de petits renfoncements (80), certains étant formés sur ladite surface extérieure (36a, 36b) du corps (22), d'autres étant formés sur ladite face (74) du poids (70)
